# EUROPEAN PATENT APPLICATION

(11) **EP 2 613 075 A2**
(43) Date of publication of application: **10.07.2013**
(21) Application number: 12194506.7
(22) Date of filing: 27.11.2012
(51) Int. Cl.: F16M 11/04, F16M 11/22, F16M 11/42

(54) **Fixture for exhibiting display devices or the like**

(30) Priority: 04.01.2012 US 201213343492
(71) Applicant: Peerless Industries, Inc., Auroro IL 60502 (US)
(72) Inventor: Gillespie, John Michael, Green Oaks, IL Illinois 60048 (US)
(74) Representative: Lawrence, John

(57) **Abstract**

A fixture (20; 120; 220; 320) for supporting an audio/visual device selectively coupled to a device mount (17) attached to the fixture (20; 120; 220; 320). The fixture (20; 120; 220; 320) comprises a base (40; 140; 240; 340) that includes a plurality of interconnected members (41, 43; 141, 143; 241, 243; 341, 343). A support (50; 150; 250; 350) includes a plurality of interconnected members (51, 53; 151, 153; 251, 253). The support (50; 150; 250; 350) is coupled to the base (40; 140; 240; 340) and is configured to have a device mount (17) coupled thereto. The base (40; 140; 240; 340) and support (50; 150; 250; 350) form a modular frame structure, the frame structure being configured to be interconnected with one or more adjacent frame structures through one or more extending members (39; 139; 239). The fixture may comprise a roller (45) for moving the fixture (20; 120; 220; 320) when tilted.

## Description

### BACKGROUND

The present application relates generally to the field of fixtures for mounting and displaying attached devices. More specifically, the present application relates to moveable and/or modular fixtures for mounting and displaying attached audio/visual devices.

### SUMMARY

One embodiment disclosed herein relates to a fixture for supporting an audio/visual device selectively coupled to a device mount attached to the fixture. The fixture comprises a base that includes a plurality of interconnected members and a support that includes a plurality of interconnected members. The support may be coupled to the base and configured to have a device mount coupled thereto. The base and support may form a modular frame structure, where the frame structure is configured to be interconnected with one or more adjacent frame structures. Each pair of adjacent frame structures are interconnected having a spacing therebetween by at least one extending member that interconnects the bases of the adjacent frame structures and at least one extending member that interconnects the supports of the adjacent frame structures. The spacing may be configurable at a first length that allows for the audio/visual devices to be coupled to the device mounts having a portrait arrangement, and the spacing may be configurable at a second length that allows for the audio/visual devices to be coupled to the device mounts having a landscape arrangement.

Another embodiment disclosed herein relates to a fixture for supporting an audio/visual device selectively coupled to a device mount attached to the fixture. The fixture includes a base having a plurality of interconnected members comprising a pair of opposing frame members and a support connected to the base. The support may be configured to have a device mount coupled thereto for supporting an attached audio/visual device. The fixture may also include a roller pivotally coupled to an end of each of the frame members of the base, where the roller is moveable about an axis of rotation for the roller, such that the fixture is moveable along the rollers when the fixture is tilted about the axis of rotation.

Yet another embodiment disclosed herein relates to a fixture for supporting an audio/visual device selectively coupled to a device mount attached to a fixture. The fixture includes a pair of adjacent frame structures, where each frame structure comprises a base and a support. The base includes a plurality of interconnected members and a roller pivotally coupled to an end of one member of the plurality of members, where the roller is moveable about an axis of rotation thereof. The support may be connected to the base and may be configured to have a device mount coupled thereto for supporting an attached audio/visual device. The fixture may also include an extending member interconnecting the pair of adjacent frame structures at a spacing therebetween. The spacing may be configurable at a first length that allows for the audio/visual devices to be coupled to the device mounts having a portrait arrangement, and the spacing may be configurable at a second length that allows for the audio/visual devices to be coupled to the device mounts having a landscape arrangement. The fixture is moveable along the rollers when the fixture is tilted about the axis of rotation. The extending member may be telescopically configured to allow adjustment of the length of the extending member between the first and second lengths of the spacing between the pair of adjacent frame structures.

An aspect of the invention provides a fixture for supporting an audio/visual device selectively coupled to a device mount attached to the fixture, the fixture comprising:
a base that includes a plurality of interconnected members; and
a support that includes a plurality of interconnected members, the support being coupled to the base and configured to have a device mount coupled thereto;
wherein the base and support form a modular frame structure, the frame structure being configured to be interconnected with one or more adjacent frame structures;
wherein the frame structure is configured to interconnect with a frame structure of an adjacent fixture via at least one first extending member that interconnects the bases of the respective frame structures and at least one second extending member that interconnects the supports of the respective frame structures such that the fixture and the adjacent fixture have a spacing therebetween;
wherein the spacing is configurable at a first length that allows for audio/visual devices to be coupled to respective device mounts having a portrait arrangement; and
wherein the spacing is configurable at a second length that allows for audio/visual devices to be coupled to respective device mounts having a landscape arrangement.

In an embodiment, the base may include a pair of opposing frame members coupled to at least one cross member, and, optionally, the pair of opposing frame members of the base may be coupled to a pair of cross members that form a substantially rectangular base.

In an embodiment, the support may include a pair of opposing frame members coupled to at least one cross member, and, optionally, the pair of opposing frame members of the support may be coupled to a pair of cross members that form a substantially rectangular support.

In an embodiment, each first and second extending member may include a flange configured to couple the extending member to the respective member of the frame structure.

In an embodiment, the fixture may include one or more rollers, casters or wheels to facilitate movement of the frame structure.

In an embodiment, the fixture may further comprise a roller pivotally coupled to an end of at least one member of the base, so that the fixture is moveable along the roller when the fixture is tilted.

In an embodiment, the fixture may further comprise a roller pivotally coupled to an end of each of the pair of frame members of the base, so that the fixture is moveable along the rollers when the fixture is tilted.

In an embodiment, the fixture may comprise:
a roller pivotally coupled to an end of each of the frame members of the base, the roller being rotatable about an axis of rotation thereof;
wherein the fixture is moveable along the rollers when the fixture is tilted about the axis of rotation.

In an embodiment, the fixture may comprise two or more adjacent frame structures.

Another aspect of the invention provides a fixture for supporting an audio/visual device selectively coupled to a device mount attached to the fixture, the fixture comprising:
a base having a plurality of interconnected members comprising a pair of opposing frame members;
a support connected to the base, the support configured to have a device mount coupled thereto for supporting an attached audio/visual device; and
a roller pivotally coupled to an end of each of the frame members of the base, the roller being movable about an axis of rotation thereof;
wherein the fixture is moveable along the rollers when the fixture is tilted about the axis of rotation.

In an embodiment, each frame member of the base may include two opposing walls that are configured to form a clevis with a pivot pin, such that the roller is pivotally coupled to the pivot pin between the walls of the frame member, and, optionally, a lock pin that engages an opening in an end of the pivot pin to prohibit the pivot pin from coming loose from the frame member, and, optionally, a plurality of bushings, wherein each bushing is disposed between one side of the roller and one of the opposing walls of the frame member.

In an embodiment, the fixture may further comprise a pair of adjustable legs disposed on opposing ends of each frame member of the base, wherein an offset distance between an end of each leg and the base is adjustable through manipulation of the respective leg; or
the fixture may further comprise an adjustable leg disposed in the base of the frame structure, wherein an offset distance between an end of the leg and the base is adjustable through manipulation of the leg.

Another aspect of the invention provides a fixture for supporting an audio/visual device selectively coupled to a device mount attached to the fixture, the fixture comprising:
a pair of adjacent frame structures, each frame structure comprising:
   a base having a plurality of interconnected members and a roller pivotally coupled to an end of one member of the plurality of members, the roller being moveable about an axis of rotation thereof;
   a support connected to the base, the support configured to have a device mount coupled thereto for supporting an attached audio/visual device; and
an extending member interconnecting the pair of adjacent frame structures at a spacing therebetween;
   wherein the spacing is configurable at a first length that allows for the audio/visual devices to be coupled to the device mounts having a portrait arrangement;
   wherein the spacing is configurable at a second length that allows for the audio/visual devices to be coupled to the device mounts having a landscape arrangement; and
   wherein the fixture is moveable along each roller when the fixture is tilted about the axis of rotation.

In an embodiment, the extending member may be telescopically configured to allow adjustment of the length of the extending member between the first and second lengths of the spacing between the pair of adjacent frame structures; or
each first and second extending member may be telescopically configured to allow adjustment of the length of each first and second extending member between the first and second lengths of the spacing between each respective pair of adjacent and interconnected frame structures.

In an embodiment, the fixture may further comprise an extension configured to be coupled to the support of the frame structure to thereby extend the height of the support to provide for the attachment of an additional device mount to the extension.

In an embodiment, the fixture may further comprise a cover assembly having a plurality of interconnected panels, wherein the cover assembly covers a portion of the fixture, and/or the fixture may further comprise a lifting mechanism that is configured to move a cable, the lifting mechanism having a foot that is configured to engage a member of the support of the fixture.

Another aspect of the invention provides an assembly comprising a fixture according to the invention and at least one display device attached to the fixture. The display device may comprise an audio/visual device such as a flat-screen or panel television.

Another aspect of the invention provides a kit of parts for assembling at least partially a fixture or an assembly according to the invention.

Another aspect of the invention provides a method of assembling and/or disassembling a fixture or an assembly according to the invention, e.g. at a location such as within a retail store.

### DESCRIPTION OF THE DRAWINGS

Figure 1 is a perspective view of an exemplary embodiment of a moveable fixture having an array of display devices disposed thereon.

Figure 2 is a perspective view of another exemplary embodiment of a moveable fixture having an array of display devices disposed thereon.

Figure 3 is a perspective view of another exemplary embodiment of a moveable fixture having an array of display devices disposed thereon.

Figure 4 is a perspective view of yet another exemplary embodiment of a moveable fixture having an array of display devices disposed thereon.

Figure 5 is a perspective view of the moveable fixture of Figure 1.

Figure 6 is a top view of the moveable fixture of Figure 1.

Figure 7 is a front view of the moveable fixture of Figure 1.

Figure 8A is a side view of the moveable fixture of Figure 1, shown in an upright position resting on the legs of the base.

Figure 8B is a side view of the moveable fixture of Figure 1, shown in an inclined moveable position resting on the roller of the base.

Figure 9A is a perspective view of an exemplary embodiment of a frame structure for use in a moveable fixture, such as the moveable fixture of Figure 1.

Figure 9B is a perspective view of three frame structures coupled together to form a modular moveable fixture, such as the moveable fixture of Figure 1.

Figure 10 is a perspective detail view of a cross member being coupled to a frame member of the frame structure with fasteners.

Figure 11 is a top view of a roller being pivotally coupled to a frame member of the moveable fixture.

Figure 12 is a perspective view of an adjustable leg being pivotally coupled to a frame member of the base of the moveable fixture.

Figure 13 is a perspective view of the moveable fixture of Figure 2.

Figure 14 is a perspective view of two interconnected frame structures forming a portion of a modular moveable fixture, such as the moveable fixture of Figure 2.

Figure 15 is a perspective view of the moveable fixture of Figure 3.

Figure 16 is a perspective view of three interconnected frame structures forming a portion of the modular moveable fixture of Figure 3.

Figure 17 is a perspective view of an extension to the moveable fixture of Figure 16 to form the moveable fixture of Figure 3.

Figure 18 is a perspective view of the moveable fixture of Figure 3 having the extension of Figure 17 disposed on the portion of the fixture of Figure 16.

Figure 19 is a perspective detail view of a cross member being coupled to an extension with fasteners.

Figure 20A is a perspective view of an exemplary embodiment of an extension.

Figure 20B is a perspective view of another exemplary embodiment of an extension.

Figure 21 is a perspective view of the moveable fixture of Figure 4.

Figure 22 is a perspective view of four interconnected frame structures forming a portion of the modular moveable fixture of Figure 4.

Figure 23 is a perspective view of an exemplary embodiment of a lifting mechanism that is configured to be coupled to a moveable fixture, such as the moveable fixtures of Figures 1-4.

Figure 24 is a top view of the lifting mechanism of Figure 23.

Figure 25 is a side view of the lifting mechanism of Figure 23.

Figure 26 is a perspective view of an exemplary embodiment of a device mount that is configured to be coupled to a frame structure of a moveable fixture to mount a display device thereto, such as the moveable fixtures of Figures 1-4.

Figure 27 is a perspective view of an exemplary embodiment of a shelf coupled to a frame structure of a moveable fixture, such as the moveable fixtures of Figures 1-4.

### DETAILED DESCRIPTION

With general reference to the Figures, disclosed in the present application are various embodiments of fixtures that are configured to support a device, such as an audio/visual device (e.g., a flat-screen or panel television) coupled to the fixture through a device mount. The fixtures includes a modular frame structure that may be flexibly interconnected with other frame structures through extending members to increase the size of the fixture to thereby increase the number of devices supported by the fixture. The length of the extending members may be varied to vary the spacing between the adjacent interconnected frame structures. For example, each extending member may have a first length that spaces the adjacent frame structures to allow for the display devices to be coupled to the fixture having a portrait arrangement. As another example, each extending member may have a second length that spaces the adjacent frame structures to allow for the display devices to be coupled to the fixture having a landscape arrangement. The fixture may also be configured to be moveable to allow for a user to adjust the location of the fixture, such as within a retail store that sells audio/visual devices. The moveable fixture includes a frame structure having a base that may comprise a pair of opposing frame members and a roller pivotally coupled to an end of each of the frame members of the base through a pivot pin. The pivot pin may define an axis of rotation for the roller, such that the fixture is moveable along the rollers when the fixture is tilted about the axis of rotation.

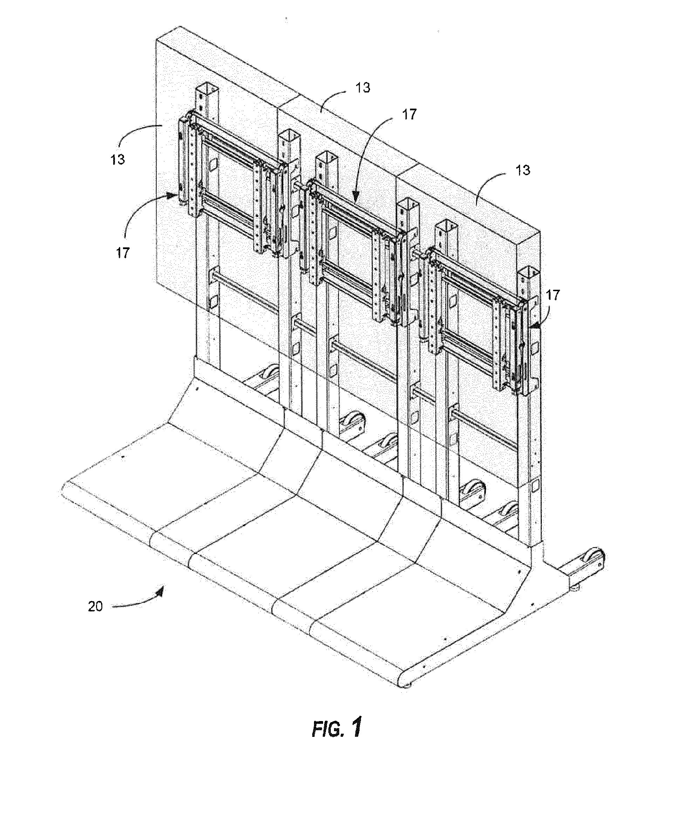

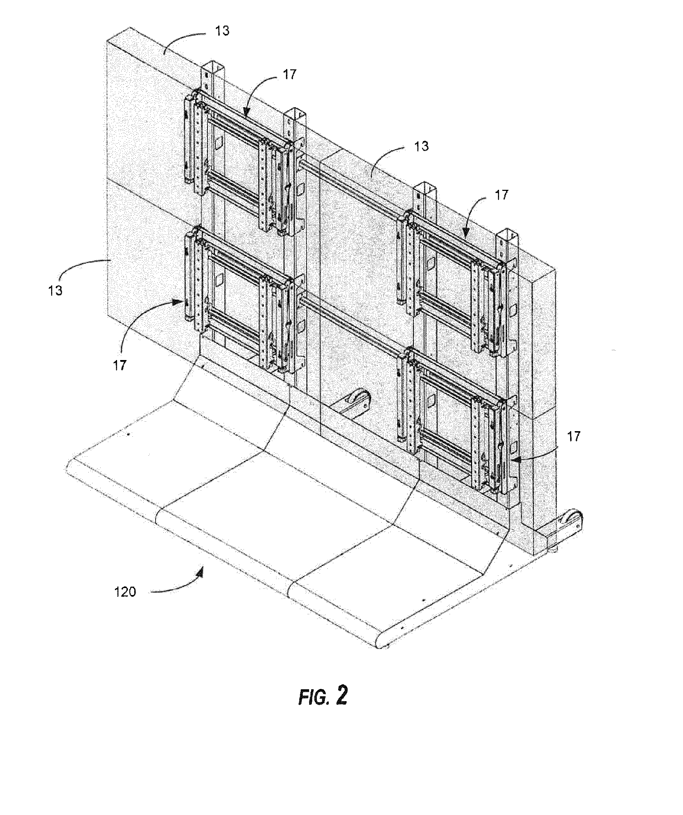

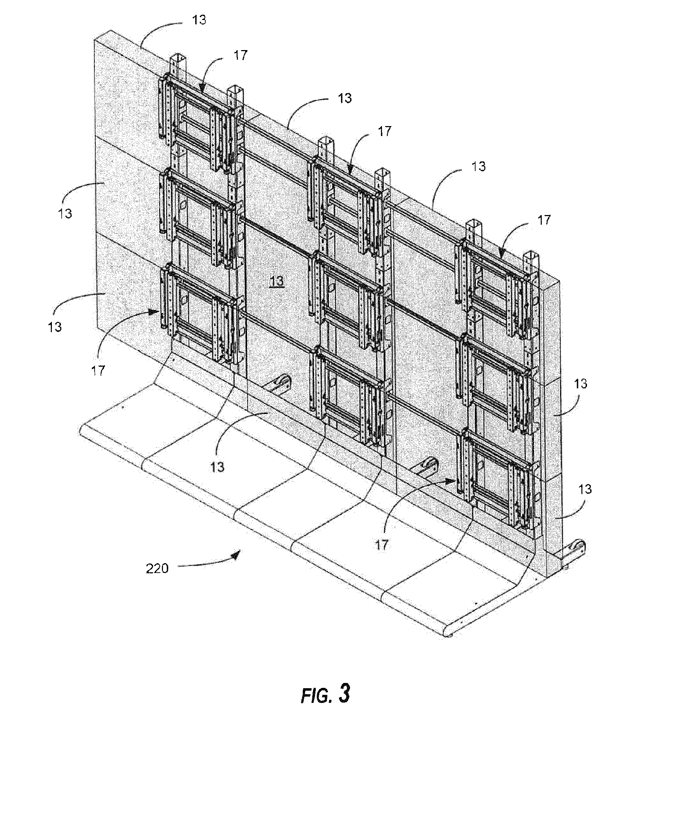

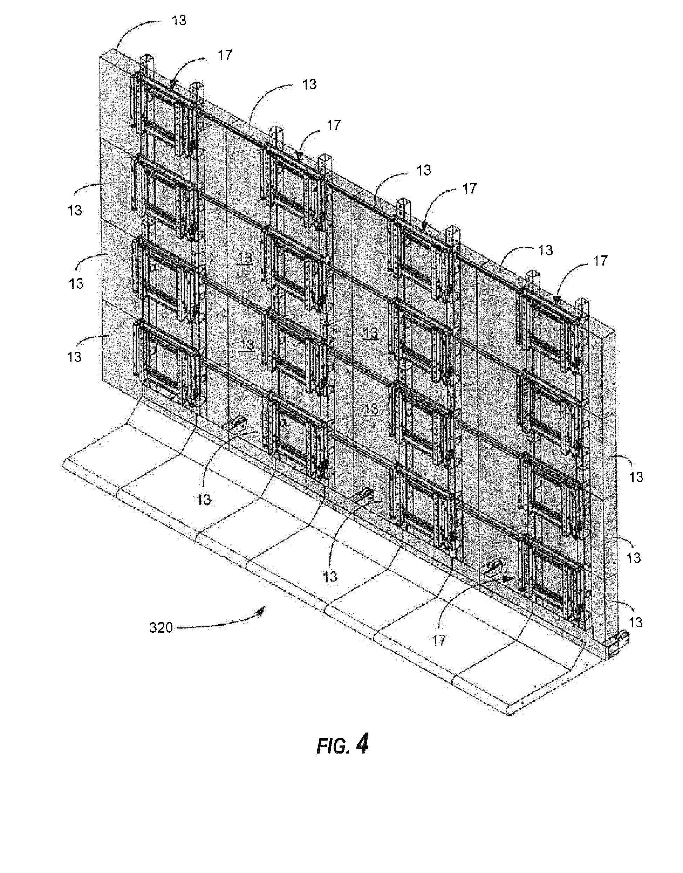

Figure 1 illustrates an exemplary embodiment of a moveable fixture 20 having an array of display devices 13 disposed thereon. As shown, the moveable fixture 20 has three display devices 13 coupled thereto in a three-by-one array or in a side-by-side manner with each display device 13 arranged in a first configuration where the height of the display device 13 is greater than its width (e.g., a portrait configuration). Figure 2 illustrates another exemplary embodiment of a moveable fixture 120 having four display devices 13 disposed on the fixture 120 in a two-by-two array, where each display device 13 is arranged in a second configuration where the width of the display device 13 is greater than its height (e.g., a landscape configuration). Figure 3 illustrates another exemplary embodiment of a moveable fixture 220 having nine display devices 13 disposed on the fixture 220 in a three-by-three array, where each display device 13 is arranged in a landscape configuration. Figure 4 illustrates yet another exemplary embodiment of a moveable fixture 320 having sixteen display devices 13 disposed on the fixture 320 in a four-by-four array, where each display device 13 is arranged in a landscape configuration. It should be noted that the fixtures, as disclosed herein, may be configured having an array with any number and/or arrangement of display devices disposed thereon, and the embodiments disclosed herein are only exemplary in nature.

According to various embodiments, the moveable fixtures 20, 120, 220, 320 are modular or flexible, such that each moveable fixture may be modified or tailored to provide additional or fewer device mounts 17 for coupling additional or fewer (i.e., any number of) devices (e.g., the display devices 13) thereto. For example, the moveable fixture 20 is modular in an upward direction (e.g., vertical) having a flexible height, where a second row of display devices 13 may be located above the three-by-one array of display devices 13 and mounted to a second row of device mounts 17 connected to the fixture 20. As another example, the moveable fixture 20 is modular in a lateral direction (e.g., horizontal) having a flexible width, where a fourth display device 13 may be located adjacent to either end display device 13 of the three-by-one array and mounted to a fourth device mount 17 connected to the fixture 20.

The moveable fixture 20, 120, 220, 320 includes a frame structure 30, 130, 230, 330 that is flexible and provides for modularity of the fixture. The frame structures 30, 130, 230, 330 are modular in both the lateral and vertical directions to allow the user to tailor the size of the fixtures 20, 120, 220, 320 to provide a tailored number of device mounts 17, such as to tailor the size of the fixture to accommodate varying sizes of floor space used to hold the fixture and the display devices attached thereto.

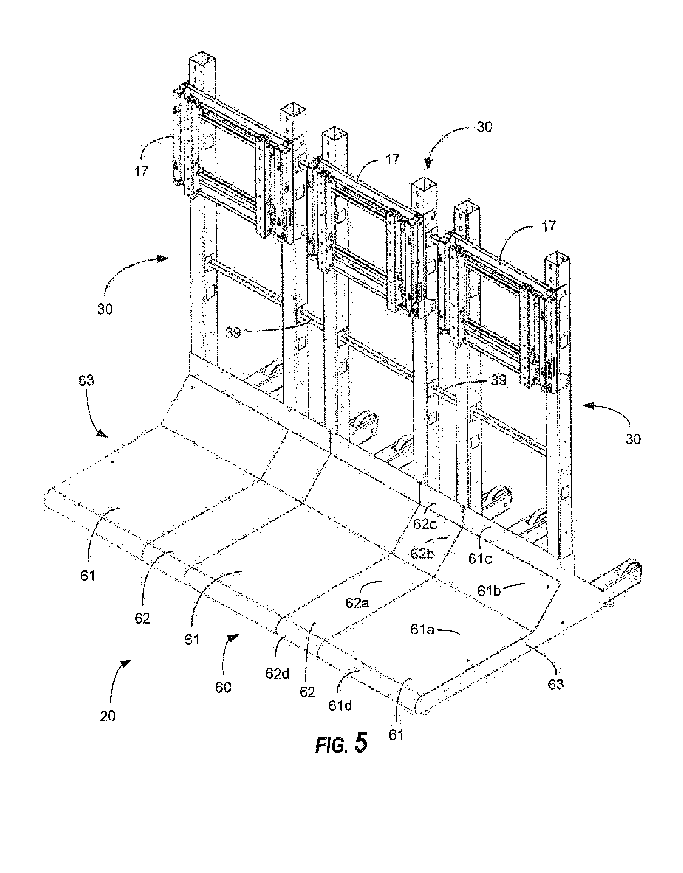

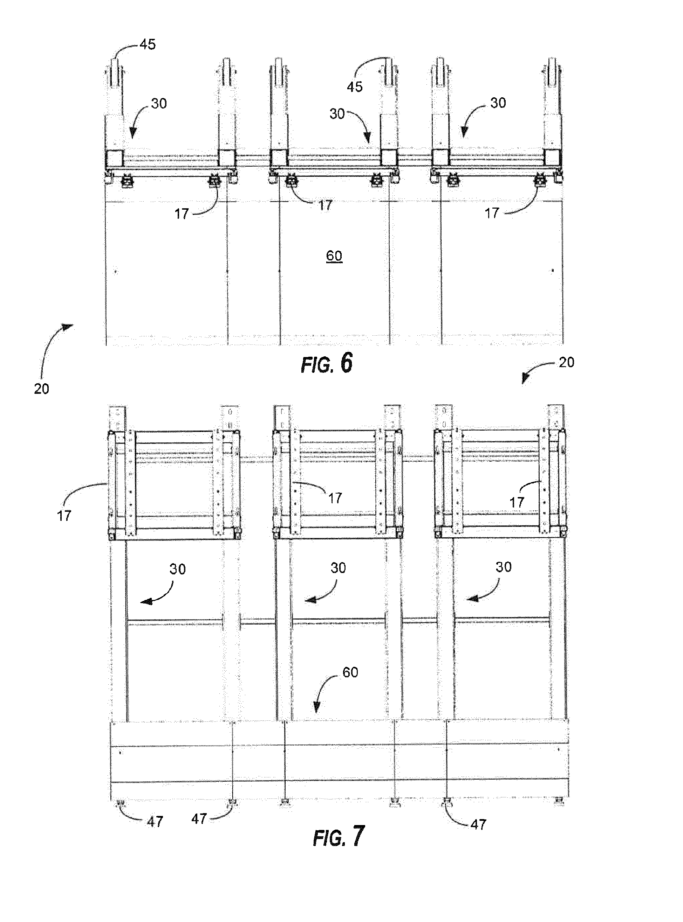

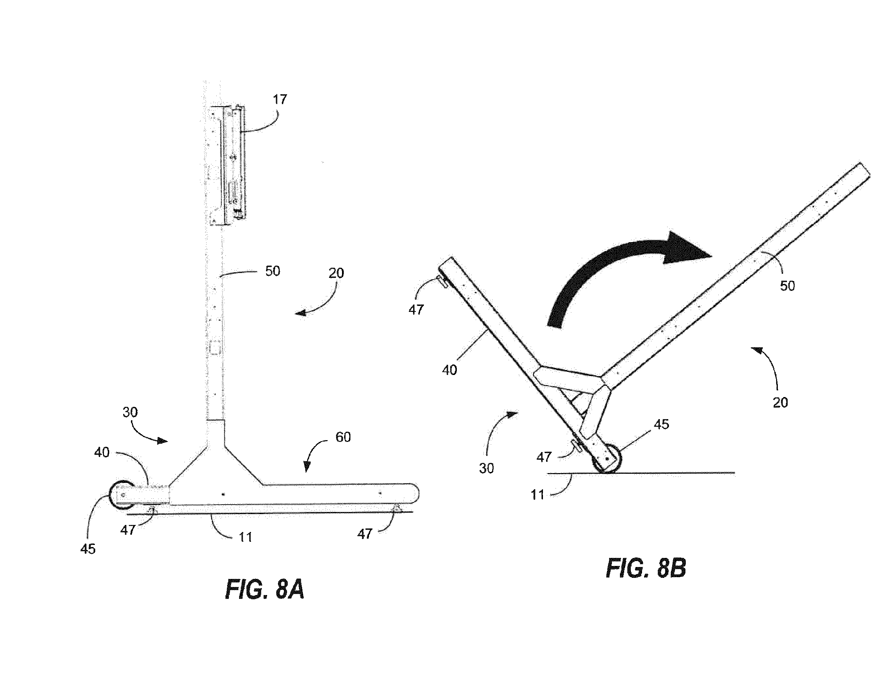

Figures 5-12 illustrate an exemplary embodiment of a modular moveable fixture 20 that is configured, as shown, to support three display devices 13 coupled thereto. However, the fixture 20 may be modified to support virtually any number of display devices 13 coupled thereto. As shown in Figure 5, the fixture 20 includes three interconnected frame structures 30, three device mounts 17, and a cover assembly 60 disposed on the interconnected frame structures 30. As arranged, each of the three interconnected frame structures 30 supports one of the three device mounts 17.

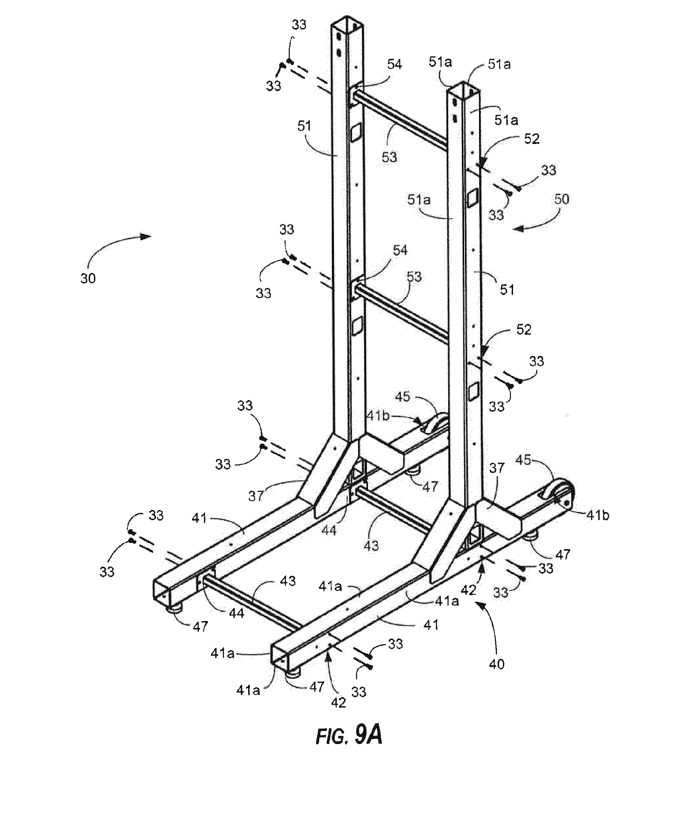

Figure 9A illustrates an exemplary embodiment of a frame structure 30 that is modular and may be interconnected with one or more additional frame structures 30 to form the structural portion or structure of a moveable fixture, such as the fixture 20 or the fixtures 120, 220, 320. The frame structure 30 includes a base or base structure 40 and a support or support structure 50 attached or coupled to the base 40, where the base 40 and support 50 comprise a plurality of interconnected frame and cross members. As shown, the base 40 includes two opposing and spaced-apart frame members 41 and two spaced apart cross members 43, where the cross members 43 are configured to be coupled or connected to the frame members 41 to form a base 40 having a generally rectangular shaped structure. Also shown, the support 50 includes two opposing and spaced-apart frame members 51 and two spaced apart cross members 53, where the cross members 53 are configured to be coupled or connected to the frame members 51 to form a support 50 having a generally rectangular shaped structure. It should be noted that the number of frame and/or cross members that form the base and/or support may be varied, such as, for example, to tailor the strength, size, and/or weight of the fixture, and the embodiments disclosed herein are only exemplary in nature.

The distance or length that the two frame members 51 of the support 50 are spaced apart is shown to be the same distance or length that the two frame members 41 of the base 40 are spaced apart. This arrangement assists in providing the modularity or flexibility of the fixture 20, which is discussed in greater detail below, and for allowing commonality, such as, for example, by allowing the cross members 53 of the support 50 to be common with the cross members 43 of the base 40. However, it should be noted that the frame members 41 of the base 40 and the frame members 51 of the support 50 may have unique or different distances of spacing, where the cross members 43 of the base 40 may be configured differently than the cross members 53 of the support 50, such as having different lengths to accommodate the varied distances of spacing.

As shown, each frame member 41 of the base 40 and each frame member 51 of the support 50 is a rectangular (e.g., square) shaped tube having four walls 41a, 51a to provide sufficient strength and modularity by being able to attach to another member or feature of the frame structure 30 on one or more of the four sides of the frame member 41, 51. However, the frame members 41, 51 may have any suitable shape (e.g., circular tube, L-shaped, U-shaped, etc.) and may still provide the modularity discussed herein.

The frame members 41 and the cross members 43 of the base 40 are coupled or otherwise operatively connected together to form the structure of the base 40, and the frame members 51 and the cross members 53 of the support 50 are coupled or connected together to form the structure of the support 50. According to an exemplary embodiment, each frame member 41 of the base 40 includes a plurality of holes or openings 42, such as to provide for coupling of other frame structure 30 members, such as the cross members 43, to the frame member 41 through fasteners (e.g., bolts, screws, etc.) Each frame member 41 includes a set of holes 42 to connect each cross member 43 thereto, where each set of holes 42 includes three holes 42a that are arranged in a triangular pattern to allow for attachment or connecting of a cross member 43 to the frame member 41 through one or more fasteners 33 that engage the one or more holes 42a. Accordingly, for the base 40 shown in Figure 9A having two frame members 41 and two cross members 43, each frame member 41 includes at least two sets of holes 42 to provide for attachment or coupling of the two cross members 43 to each frame member 41 through the fasteners 33.

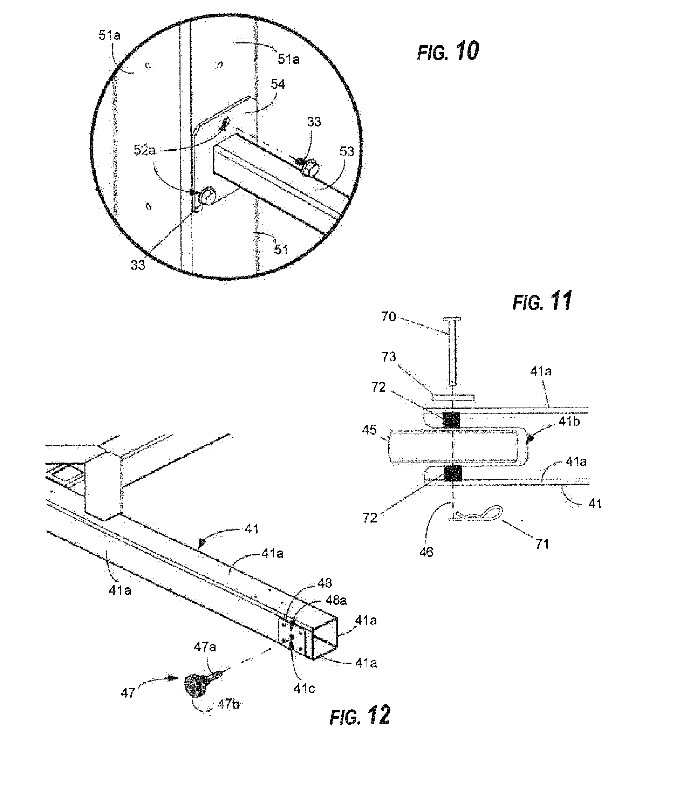

Each frame member 51 of the support 50 includes a plurality of holes or openings 52, such as to provide for coupling of other the members (e.g., the cross members 53) of the fixture 20 to the frame member 51. As shown in Figure 10, each frame member 51 includes one or more sets of holes 52, where each set of holes 52 includes three holes 52a that are arranged in a triangular pattern (note that only two holes 52a are visible as the cross member 53 hides the third hole 52a) to allow for attachment or connecting of a cross member 53 to the frame member 51. Accordingly, for the support 50 having two frame members 51 and two cross members 53, each frame member 51 includes at least two sets of holes 52a to provide for attachment of the two cross members 53.

According to an exemplary embodiment, each cross member 43 of the base 40 includes a flange 44 disposed on the end of the tube portion of the cross member 43, where the flange 44 is configured to abut a frame member 41 for connecting thereto. The flange 44 includes a set of holes 44a that is configured to match the set of holes 42 in the frame member 41 to allow for a fastener 33 to couple the cross member 43 to the frame member 41 through the mating sets of holes. The flange 44 can be formed separately from the tube portion of the cross member 43 and coupled thereto, such as through welding or any suitable method, or the flange 44 may be integrally formed with the tube portion of the cross member 43.

As shown in Figure 10, each cross member 53 of the support 50 includes a flange 54 disposed on each end of the tube portion of the cross member 53, where each flange 54 is configured to abut the inside surface of the pair of opposing and spaced apart frame members 51. The flange 54 includes holes that have a similar arrangement as holes 52 in the frame member 51. This arrangement helps set the spacing between the pair of opposing frame members 51 of the support 50 in accordance with the width between the flanges 54 of the cross member 53. Accordingly, the cross members 43 of the base 40 may have the same configuration as the cross members 53 of the support 50 to set a common width between the pair of opposing frame members 41 of the base 40 and the width between the pair of opposing frame members 51 of the support 50.

It should be noted that the frame members 41, 51 may include any number of sets of holes 42, 52, having any suitable arrangement or pattern, such as, for example, depending on the number of cross members 43, 53 used to construct the modular fixture 20, and the number and arrangement of holes disclosed herein are intended to only be exemplary in nature. For example, the frame members 41, 51 may include four holes 42a, 52a arranged in a square or rectangular pattern or to have any arrangement. Additionally, the number of cross members may be varied, for example, to tailor the strength of the fixture 20. Additionally, the number of fasteners 33 used to connect the frame members 41, 51 and cross members 43, 53 may be varied, and not all of the holes 42a, 52a in the set of holes 42, 52 needs be used. For example, the base 40 may include two or fewer fasteners to connect each frame member 41 and each cross member 43, even though there might be more than two holes (e.g., three holes 42a) that could couple the members together. For example, the number of fasteners used may be predetermined to provide an optimal balance between strength and weight.

The base 40 is configured to be coupled to the support 50 to form the frame structure 30. According to an exemplary embodiment, the frame members 41 of the base 40 are coupled directly to the frame members 51 of the support 50, such as through fasteners (e.g., bolts, screws, etc.), welding, or a combination thereof. Alternatively, as shown in Figure 9A, the base 40 may be coupled to the support 50 through a connecting bracket or assembly 37. As shown, the connecting assembly 37 includes a V-shaped member, which may comprise one bracket having an apex configured to be coupled to the support 50, such as the frame member 51 thereof, and legs that are configured to be coupled to the base 40, such as the frame member 41 thereof. Alternatively, the V-shaped member may comprise two or more interconnected brackets, such as where each leg of the V-shape is a separate bracket.

As shown in Figures 5-9B, the fixture 20 is configured to be moveable to allow for repositioning of the fixture 20 and accordingly of the display devices 13 coupled thereto. The fixture 20 includes features that help facilitate movement of the fixture 20 (i.e., help make it easier for a user or customer to move the fixture 20). As shown, each frame member 41 of the base 40 includes a roller 45 disposed at one end (e.g., a rear end) of the base 40, such that the base 40 having two frame members 41 has two rollers 45 disposed along a common axis of rotation 46 to provide movement of the fixture 20 through the rollers 45. Although, the fixture 20 includes two rollers 45 in one particular embodiment in order to provide stability to the fixture 20 during movement, it should be noted that the fixture 20 may include one roller 45 or a plurality of rollers 45 to help facilitate movement of the fixture 20.

As shown, the end of the frame member 41 includes a notch 41b in the upper and lower walls of the rectangular tube, where the notch 41b is configured to receive the roller 45 therein. As shown in Figure 11, the side walls 41a of the end of the frame member 41 support a pivot member or pivot pin 70 that defines the axis of rotation 46 of the roller 45 to allow relative rotation between the roller 45 and the frame member 41. The walls 41a of the frame member 41 may form a clevis with the pivot pin 70 passing through the roller 45. This arrangement provides support for the pivot pin 70, as it is supported as a cantilever beam, and stability during movement of the fixture 20. The pivot pin 70 may be held in place (e.g., prevented from moving along the axis of rotation 46), such as, for example, by a pin (e.g., a cotter pin 71) that engages an opening in the end of the pivot pin 70 to prevent the pivot pin 70 from moving along the axis of rotation 46 to ensure engagement between the pivot pin 70 and the frame member 41. The base 40 of the fixture 20 may also include one or more bushings or bearings to provide efficient relative rotation between the roller 45 and the frame member 41. As shown in Figure 11, the base 40 may include two bushings 72 disposed on opposing sides of the roller 45 between the roller 45 and the frame member 41. The base 40 may also include a washer, such as the washer 73 disposed between the head of the pivot pin 70 and the adjacent wall 41a of the frame member 41. However, it should be noted that the roller assembly may be configured differently, and the embodiments disclosed herein are only exemplary in nature.

As discussed, each roller 45 is configured to allow movement of the fixture 20. Accordingly, the diameter of the roller 45 is typically larger than the height of the side-wall 41a of the frame member 41 of the base 40, such as where the axis of rotation 46 of the roller 45 is located about in the vertical center of the height of the side-wall 41 a of the frame member 41. However, the diameter of the roller 45 may be less than the height of the side-wall 41a of the frame member, such as where the axis of rotation 46 of the roller 45 is located below the vertical center of the height of the side-wall 41a of the frame member 41.

It should be noted that although the figures show the moveable frame structures 30, 130, 230, 330 of the fixtures 20, 120, 220, 320 to include rollers (e.g., the roller 45) to facilitate movement of the frame structure, the frame structures may be configured with other devices and/or other configurations to facilitate such movement. For example, the fixture 20 may be configured to include one or more casters (e.g., swivel casters, locking casters, etc.), wheels, or any suitable device to facilitate movement of the frame structure.

The base 40 may also include one or more legs 47, each of which may be adjustable relative to the base 40, so as to provide leveling of the base 40 relative to a floor or foundation that supports the base 40. As shown in Figure 9A, each frame member 41 of the base 40 includes two adjustable legs 47 disposed on opposing ends of the frame member 41. Thus, the fixture 20 having two spaced apart and opposing frame members 41 is configured to have adjustable legs 47 in each of four locations that are near the four corners of the structure to allow for leveling of each corner independently of the remaining three corners.

According to an exemplary embodiment, each adjustable leg 47 includes a threaded post 47a with a platform 47b disposed on an end of the post 47a. The threaded post 47a may be configured to thread into a threaded hole 41c in the bottom wall 41a of the frame member 41, may be configured to thread into a threaded hole 48a of a plate 48 (e.g., a tapping plate), or may thread into both a threaded hole 41c in the bottom wall 41a of the frame member 41 and a threaded hole 48a of the plate 48, as shown in Figure 12. Accordingly, rotation of the adjustable leg 47 relative to the base 40 (e.g., the frame member 41) in a first rotational direction (e.g., clockwise) moves the platform 47b toward the frame member 41 or raises the platform 47b, and rotation of the adjustable leg 47 relative to the base 40 in a second rotational direction (e.g., counter-clockwise) moves the platform 47b away from the frame member 41 or lowers the platform 47b.

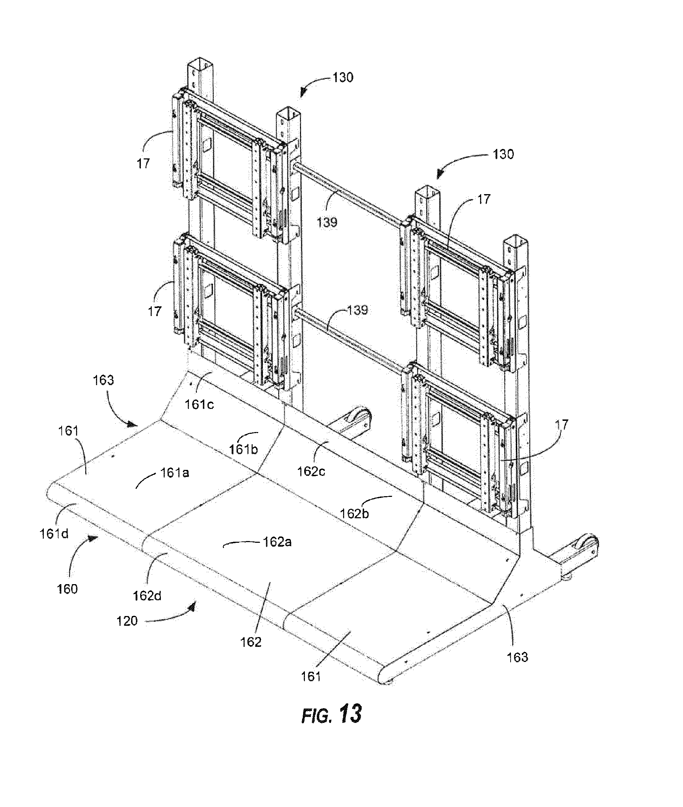

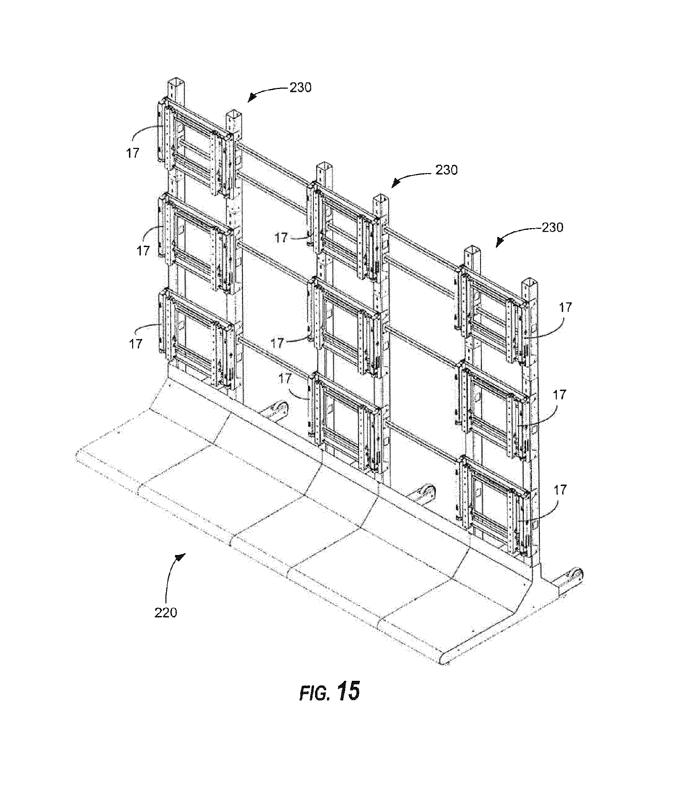

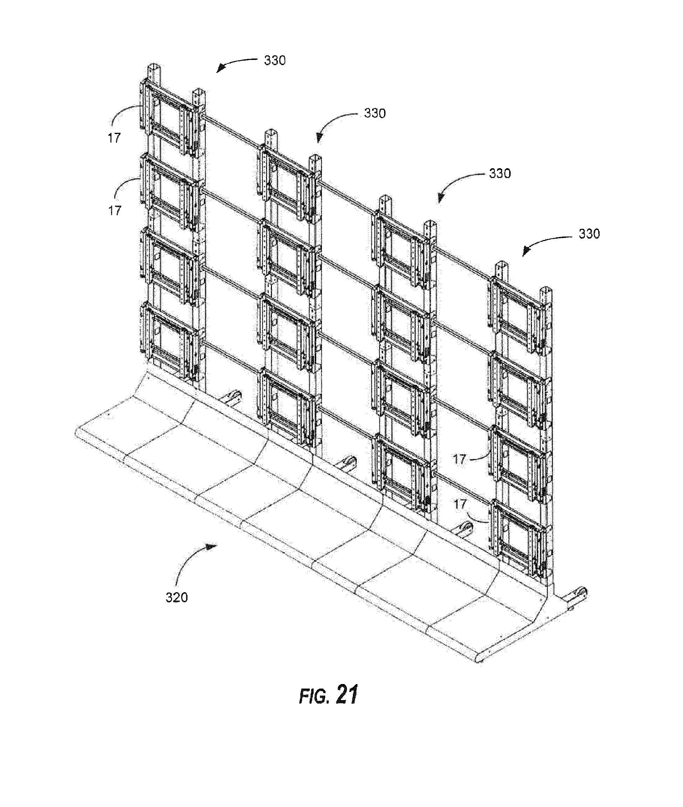

Each support is configured to support one or more device mounts 17 coupled or mounted thereto. As shown in Figures 1 and 5, each frame structure 30 (e.g., the support 50) of the fixture 20 is configured to support one device mount 17 coupled thereto. As shown in Figures 2 and 13, each frame structure 130 (e.g., the support 150) of the fixture 120 is configured to support two device mounts 17 coupled thereto. As shown in Figures 3 and 15, each frame structure 230 (e.g., the support 250) of the fixture 220 is configured to support three device mounts 17 coupled thereto. As shown in Figures 4 and 21, each frame structure 330 (e.g., the support 350) of the fixture 320 is configured to support four device mounts 17 coupled thereto. However, it should be noted that each support of each frame structure is modular and may be configured to support any number of display devices coupled thereto.

The fixtures 20, 120, 220, 320 disclosed herein are configured to be modular and flexible, such as by being configured to be modified to include additional (or fewer) frame structures (e.g., the frame structure 30) to support the attachment of additional (or fewer) display devices 13 thereto, as discussed in more detail above. Additionally, the frame structures may have frame members of the support that vary in length to provide the flexible modularity of the fixtures, such as by being able to support additional (or fewer) mounts for the attachment of additional (or fewer) display devices 13 with the same number of frame structures. In other words, the length or height of the frame members of the support may be increased to support the attachment of additional display devices thereto, or the length of the frame members of the support may be decreased to support the attachment of fewer display devices thereto. As an example, the length or height of the support of the frame structure may be increased by connecting one or more extensions or one or more additional supports to the existing support, where the extensions and/or additional supports provide additional mounts for the attachment of additional display devices.

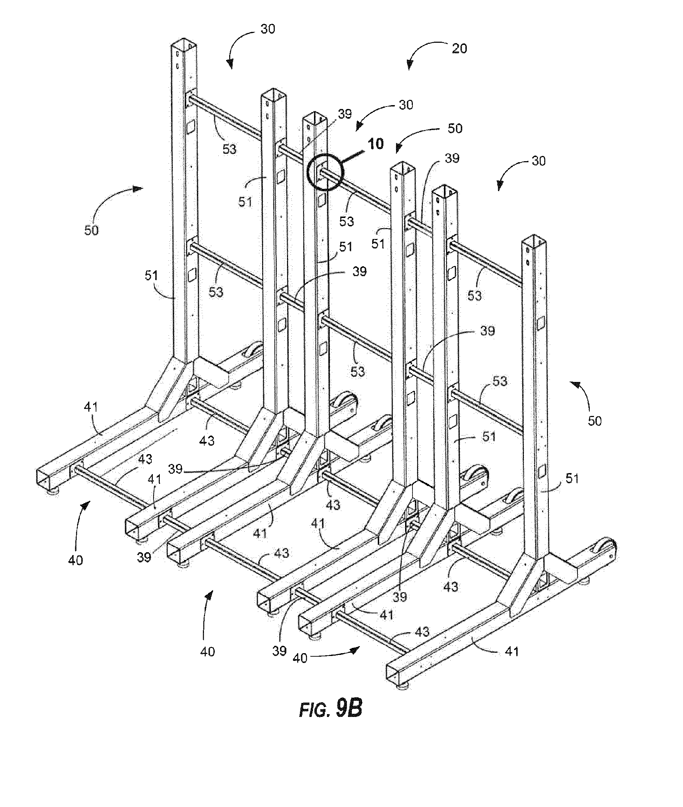

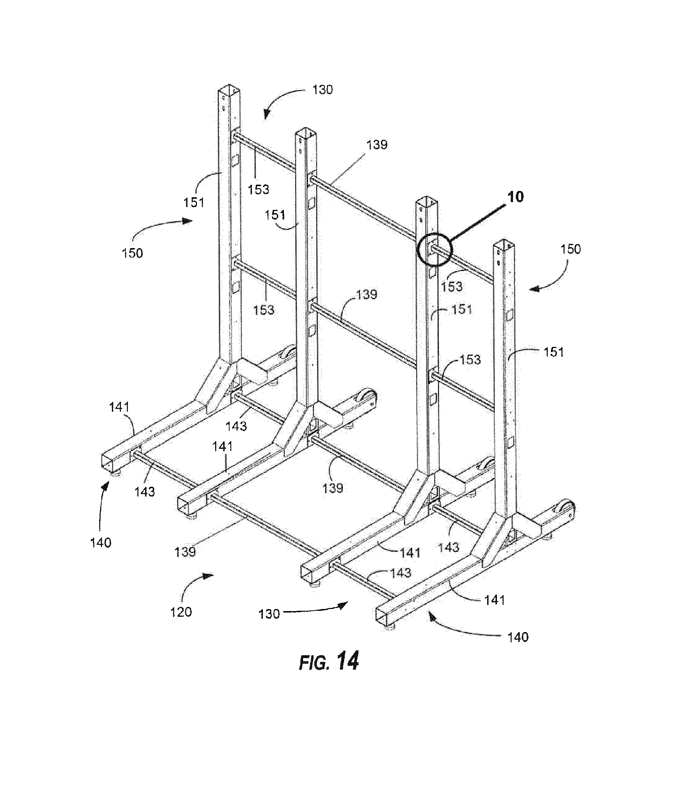

Figure 9B illustrates an exemplary arrangement of three frame structures 30 connected together in a lateral direction through a plurality of extending members 39. As shown, each pair of adjacent frame structures 30 are interconnected using four extending members 39, where two extending members 39 interconnect the adjacent bases 40, such as by connecting frame member 41 to frame member 41, and where the remaining two extending members 39 interconnect the adjacent supports 50, such as by connecting frame member 51 to frame member 51. According to an exemplary embodiment, the extending member 39 has a tubular structure with a flange disposed on each end of the tubular structure for connecting the extending member 39 to the frame member 41, 51. In other words, the extending member 39 may be configured like the cross members 43, 53. However, it should be noted that the extending member 39 may have any suitable configuration, (e.g., a bracket, a shaft, etc.) and the embodiments disclosed herein are not intending to be limiting. Further, the length of the extending member 39 may be varied, such as to vary the distance between the adjacent frame structures 30 that are interconnected through the extending members 39. Thus, as shown in Figure 9B, a shorter extending member 39 may be used to decrease the relative spacing between the pair of adjacent and interconnected frame structures 30, such as to allow the display devices 13 mounted to the fixture 20 to be positioned in a portrait arrangement (as shown in Figure 1). Alternatively, as shown in Figure 14, a longer extending member 139 may be used to increase the relative spacing between the pair of adjacent and interconnected frame structures 130 of the fixture 120, such as to allow the display devices 13 mounted to the fixture 120 to be positioned in a landscape arrangement (as shown in Figure 2).

In yet another embodiment, the extending members 39 may have "telescoping" structures which permit the length of each extending member 39 to be adjusted as necessary depending upon the particular dimensions of the display devices being mounted. This provides the added benefit of reducing the need for different sized extending members 39 in certain situations. Telescoping extending members also allow the customer to modify the spacing between interconnected frame structures simply by adjusting the length of the telescoping extending member without having to disassemble or disconnect the coupled frame structures.

According to an exemplary embodiment, the telescoping extending member includes an outer tubular portion and an inner tubular portion that is configured to slide within the outer tubular portion. In other words, the inner and outer tubular portions may nest together. The outer portion includes a slot that is configured to overlap with a slot in the inner portion, where the length of overlap between the slots varies based on the length of the inner portion that is disposed within the outer portion. Thus, the overall length of the telescoping extending member may be increased by reducing the length of the inner portion that is disposed within the outer portion and thereby reducing the overlap between the two slots. Conversely, the overall length of the telescoping extending member may be decreased by increasing the length of the inner portion that is disposed within the outer portion and thereby increasing the overlap between the two slots. The telescoping member may be fixed into position (i.e., the relative arrangement between the inner and outer portions) through a fastener (e.g. nut and bolt) or any suitable method. This arrangement provides continuous adjustability of the telescoping extending member, such as over the length of the slots between a first position and a second position, which may correspond to a first length and a second length, respectively of the extending member.

According to another exemplary embodiment, the telescoping extending member includes a first portion and a second portion that is configured to have an adjustable overlap with the first portion. The first and second portions may be configured as tubes, as plates, as brackets (L-shaped, C-shaped, etc.), or may have any suitable configuration. Both portions may include a plurality of holes having similar configurations. For example, the plurality of holes in both portions may be configured having a linear arrangement with a common spacing between the holes, so that the spacing between the holes determines an increment of adjustment between the first and second portions of the telescoping extending member. In other words, the first portion of the telescoping extending member may be adjustable relative to the second portion in increments of length that is equal to the spacing between each pair of adjacent holes of the plurality of holes. Accordingly, the length of the telescoping extending member may be adjustable by the same length of increments. The first and second portions may be selectively locked together in each relative configuration through a fastener, which may engage one hole of the plurality of holes of each respective portion, or through any suitable method.

Further, the cross members (e.g., cross members 43) of the base (e.g., base 40) and/or the cross members (e.g., cross members 53) of the support (e.g., support 50) may be configured to be telescopic cross members having adjustable lengths to provide frame structures (e.g., the frame structure 30) having adjustable widths. Accordingly, the telescopic cross members may be configured as described above or may have any suitable configuration that allows for adjustment of the length of the member. It should also be noted that any of the members that comprise the frame structures may be telescopically configured, such as the frame members (e.g., frame members 51) of the support (e.g., support 50) to provide adjustability to the height of the member. This arrangement may allow the fixture to accommodate the attachment of additional display devices without the need to connect additional members to the frame structure.

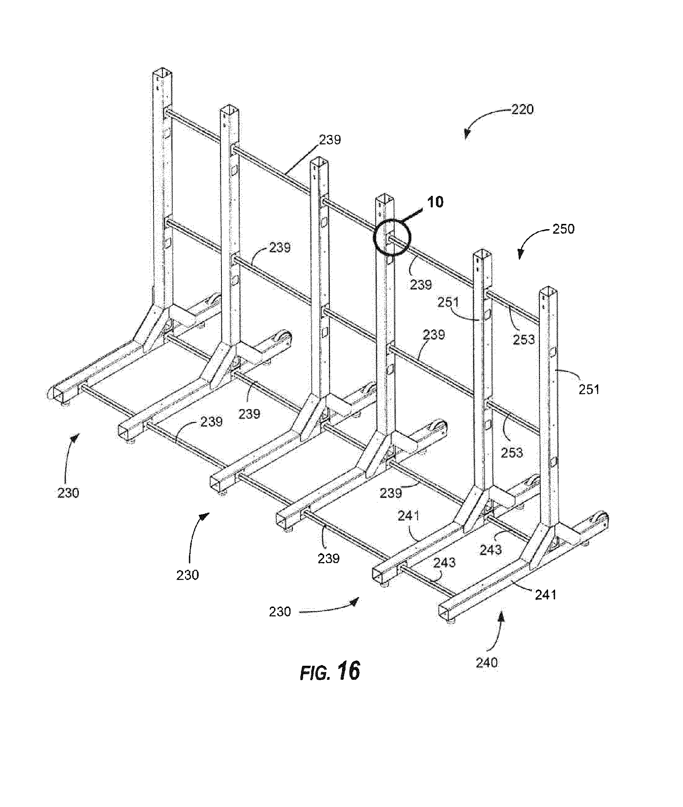

Each frame structure 130 includes a base 140 coupled to a support 150. The base 140 includes a pair of frame members 141 interconnected with a pair of cross members 143, and the support 150 includes a pair of frame members 151 interconnected with a pair of cross members 153. As shown, a pair of extending members 139 connects the bases 140 of the adjacent frame structures 130 through the adjacent frame members 141, and another pair of extending members 139 connects the supports 150 of the adjacent frame structures 130 through the adjacent frame members 151. As shown in Figure 16, a plurality of extending members 239 interconnect the adjacent pairs of frame structures 230 of the fixture 220 by interconnecting the adjacent frame members 241, 251 of the adjacent bases 240 and supports 250. Thus, the length of the extending members 239 sets the relative spacing between the adjacent pairs of interconnected frame structures 230. Accordingly, the length of the various extending members 139, 239 may be the same or may vary to influence the spacing between the adjacent pairs of interconnected frame structures, respectively. It should also be noted that a fixture may include extending members having varying lengths, or individual "telescoping" extending members, so as to interconnect a plurality of frame structures that are separated by varying amounts of spacing.

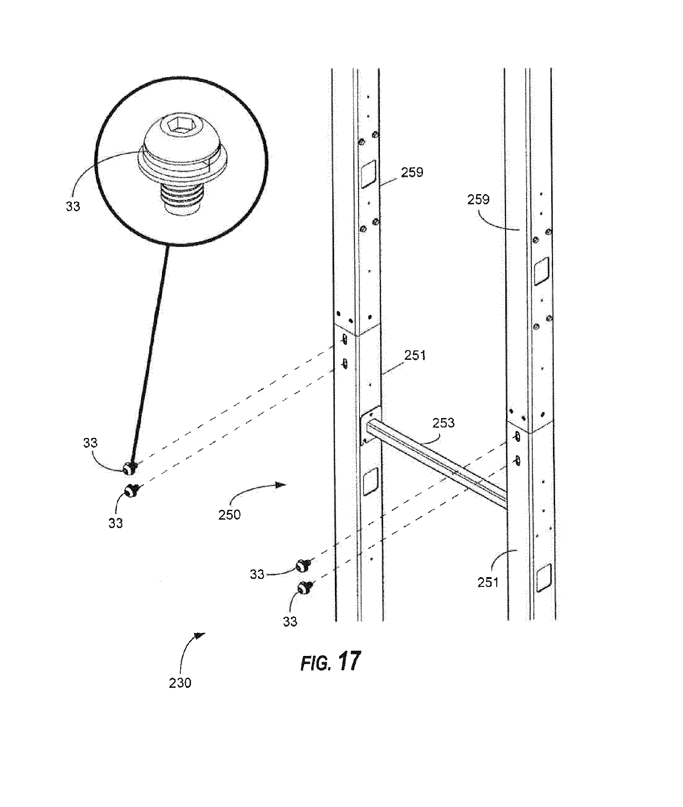

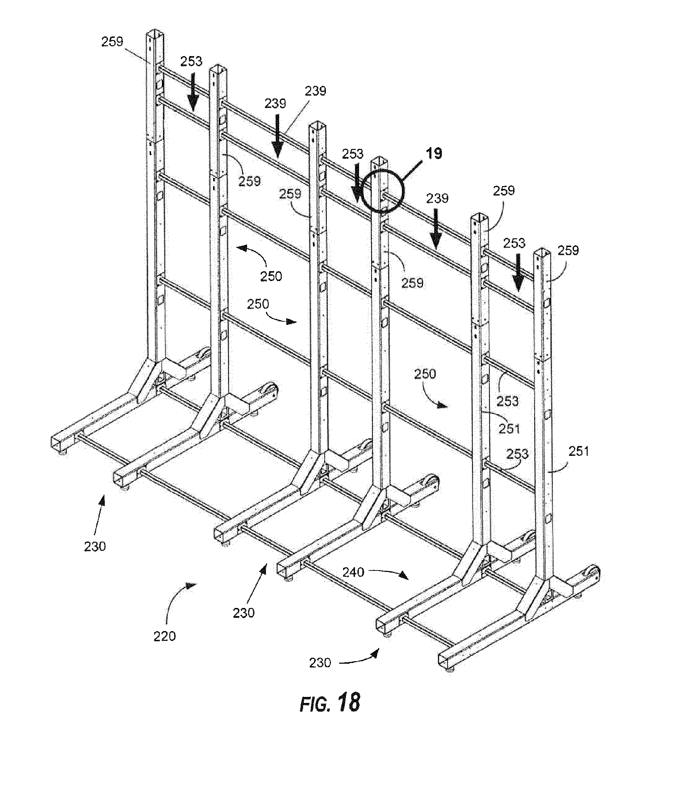

Also shown in Figures 16-18 are the three interconnected frame structures 230 of a moveable fixture 220, where each frame structure 230 is configured having a support 250 that includes two opposing and spaced-apart tubular frame members 251 connected to two spaced apart cross members 253. The top end of each of the tubular frame members 251 is configured to be connected or coupled to a bottom end of an extension 259 to increase the height of the frame structure 230 to support one or more additional device mounts 17 for the attachment of additional display devices 13 disposed above the lower device mount 17. For example, the top of the tubular frame member 251 is open to be able to receive another member therein. As another example, the other member (e.g., the extension 259) may abut the end of the frame member 251 and be connected thereto, such as through welding or fixing brackets and fasteners.

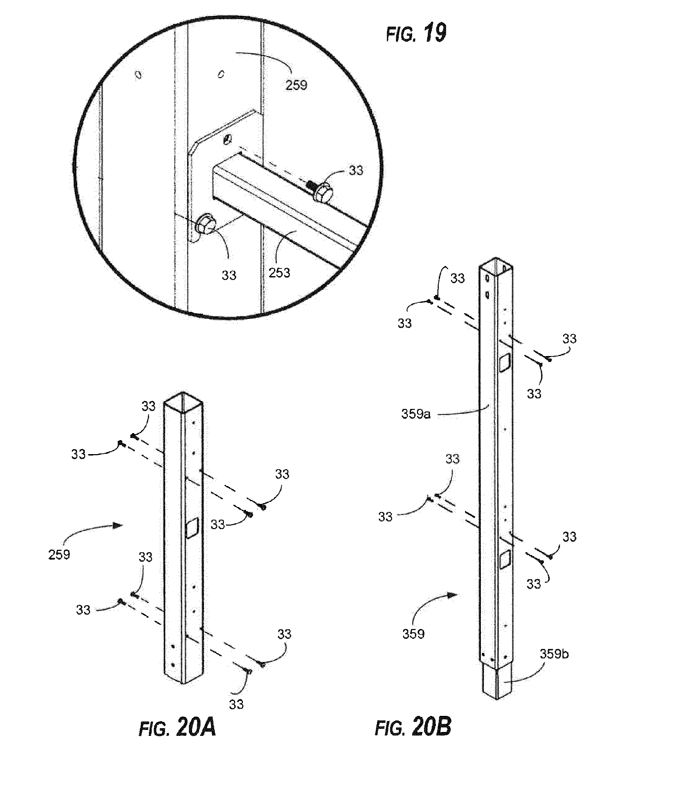

As shown in Figure 20A, an exemplary embodiment of an extension 259 is configured as a second frame member 251 and coupled to the (first) frame member 251 of the support 250, such as through fasteners, welding, or any suitable method, to extend the height of the frame structure 230. Accordingly, the extension 259 may be configured as described above for the frame member 251. As an example, a second or upper support 250 may be connected or coupled to the first or lower support 250 of the frame structure 230, where the second support 250 provides additional device mounts 17 for attaching additional display devices 13 above the lower device mounts 17 coupled to the lower support 250. The second support 250 may be configured as the first support 250 described above.

Figure 20B depicts another exemplary embodiment of an extension 359 including a tubular body 359a having a shape and size (e.g., cross-sectional) that is similar to the shape and size (e.g., cross-sectional) of the frame member 351 and a tubular end 359b. The tubular end 359b may have a similar shape as the tubular body 359a, but has a dissimilar size, such as to nest with the end of the frame member 351. For example, the tubular end 359b of the extension 359 may be smaller in size relative to the tubular frame member 351 to allow the tubular end 359b to nest within the tubular frame member 351 of the support 350 to provide a lead in and positive mechanical engagement between the frame member 351 and the extension 359. Alternatively, the end 359b may be larger in size relative to the frame member 351 to allow the end 359b to nest around (i.e., external to) the frame member 351.

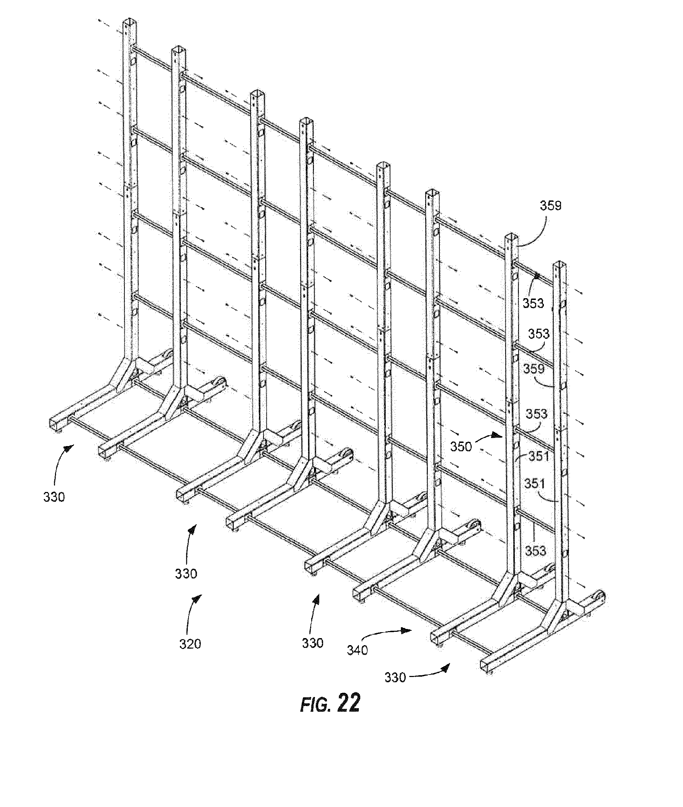

As shown in Figure 22, the end 359b of the extension 359 is configured to nest within the end of the frame member 351 in which the extension 359 is coupled to for support. The end 359b may include holes for coupling the extension 359 to the frame member 351, such as through fasteners. The frame structure 330 of the fixture 320 having a support 350 with two opposing frame members 351 includes an extension 359 coupled to each frame member 351. The pair of opposing extensions 359 may then be interconnected through one or more cross members 353 to provide additional structural support to the fixture 320. It should be noted that the fixtures disclosed herein may be configured to include additional extensions or supports, and the embodiments disclosed herein are only exemplary in nature.

The fixture may also include a cover assembly, such as to cover a portion of the frame structure. The cover member comprises a plurality of interconnected panels that are configured to cover the base of the frame structure. As shown in Figure 5, for example, the fixture 20 includes a cover assembly 60 that comprises a set of panels 61 that cover the top of the frame structure 30, where the set of panels 61 includes a first or horizontal cover panel 61a, a second or inclined cover panel 61b, a third or vertical cover panel 61c, and a fourth or front cover panel 61d. The set of panels 61 may be configured to conform to the shape of the frame structure 30 (e.g., the base 40) or may have a unique shape that may improve the aesthetics of the fixture 20. Like the fixture 20, the set of panels 61 are configured to be modular, such that when the fixture 20 is modified by increasing or decreasing the number of frame structures 30 that comprise the fixture 20, the number of sets of panels 61 may be increased or decreased accordingly. As shown in Figure 5, the fixture 20 having three frame structures 30 includes three sets of panels 61 covering the respective structures. The width of each panel of the set of panels 61 is configured based on the width of the frame structure 30 and is configured to attach thereto, such as to the base 40 through fasteners or any suitable method.

Also shown in Figure 5, the fixture 20 includes two second sets of panels 62 that are disposed between the pair of adjacent first sets of panels 61. The second set of panels 62 includes a first or horizontal cover panel 62a, a second or inclined cover panel 62b, a third or vertical cover panel 62c, and a fourth or front cover panel 62d. The second set of panels 62 may define a similar profile as the first set of panels 61, such that they form a continuous cover assembly 60 over the fixture 20. However, the second set of panels 62 may be configured to have a different width, such as to accommodate the varying width or spacing provided between the pair of adjacent frame structures 30. Thus, the fixture 20 having a relative narrower spacing between the frame structures 30 has second set of panels 62 with a relative narrow width.

As shown in Figure 13, the fixture 120 includes a second set of panels 162 disposed between first sets of panels 161, where the second sets of panels 162 are wider relative to the second set of panels 62 of the fixture 20, since the spacing between the frame structures 130 of the fixture 120 is larger or wider relative to the spacing between the frame structures 30 of the fixture 20. The second set of panels 162 of the fixture 120 comprise a first panel 162a, a second panel 162b, a third panel 162c, and a fourth panel 162d, where the second set of panels 162 form a continuous cover assembly 160 with the first set of panels 161, which comprises respective first, second, third, and fourth panels 161a, 161b, 161c, 161d.

As shown in Figures 5 and 13, the cover assemblies 60, 160 of the fixtures 20, 120 may include side panels 63, 163 that are configured to cover the outside facing surfaces of the outboard frame structures 30, 130. The side panels 63, 163 may have a shape that is defined by the profile of the set of panels 161 and/or the shape of the frame structures 30, 130. The side panels 63, 163 may be connected to the frame structures 30, 130, such as to the bases 40, 140 thereof, through fasteners or any suitable method. It should be noted that the cover assemblies for the fixtures may include any number of panels having any configuration (e.g., shape) and those embodiments disclosed herein are meant as examples and not meant as limitations.

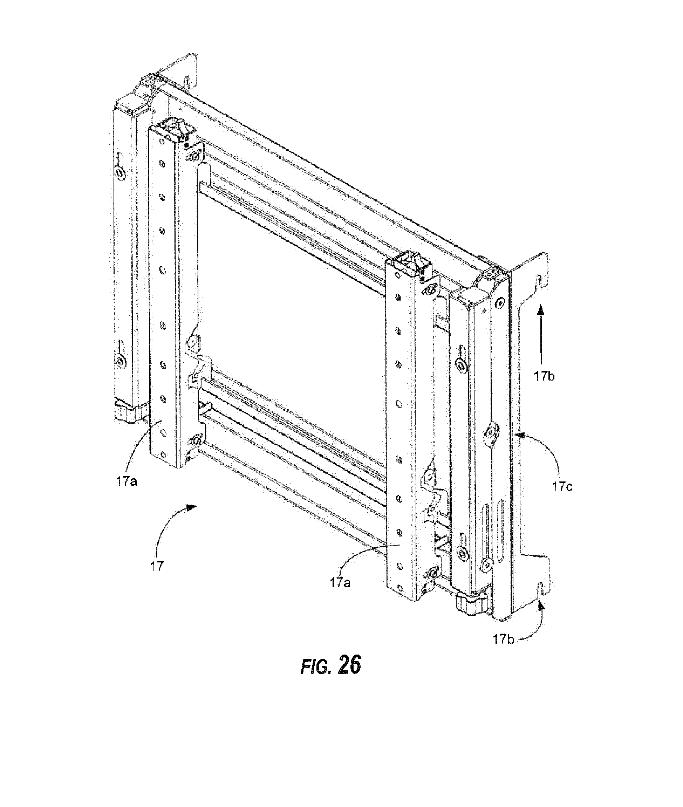

Figure 26 illustrates an exemplary embodiment of a device mount 17 configured to be coupled to a fixture, such as fixtures 20, 120, 220, 320. The device mount 17 is configured to support a display device 13 coupled thereto and may provide tilt and/or articulation (e.g., movement) of the display device 13 by allowing the display device 13 to move relative to the fixture. Each device mount 17 includes a mounting surface 17a for attaching or mounting a display device 13 thereto. As shown, the device mount I7 includes two parallel mounting surfaces 17a. Each device mount 17 also includes an attachment feature 17b that is configured to attach or couple the device mount 17 to the fixture, such as to the support (e.g., the support 50) of the fixture (e.g., the fixture 20). Each device mount 17 may also include an adjustment mechanism or assembly 17c that is configured to provide adjustment, such as tilt or articulation, of the mounting surfaces 17a relative to the attachment features 17b. Exemplary embodiments of such device mounts 17 are disclosed in U.S. Patent Application No. 121704,777, titled "Adjustable Display Mount" and filed on February 12, 2010 by James D. Walters and Matthew W. Stifal, which is assigned to Peerless Industries, Inc. The contents of this application, which was published as US 201 I/0198460 on 18 August 2011, are incorporated herein by reference in their entirety. However, it should be noted that the device mount 17 may have a wide variety of suitable configurations, and the embodiments disclosed herein are only exemplary in nature.

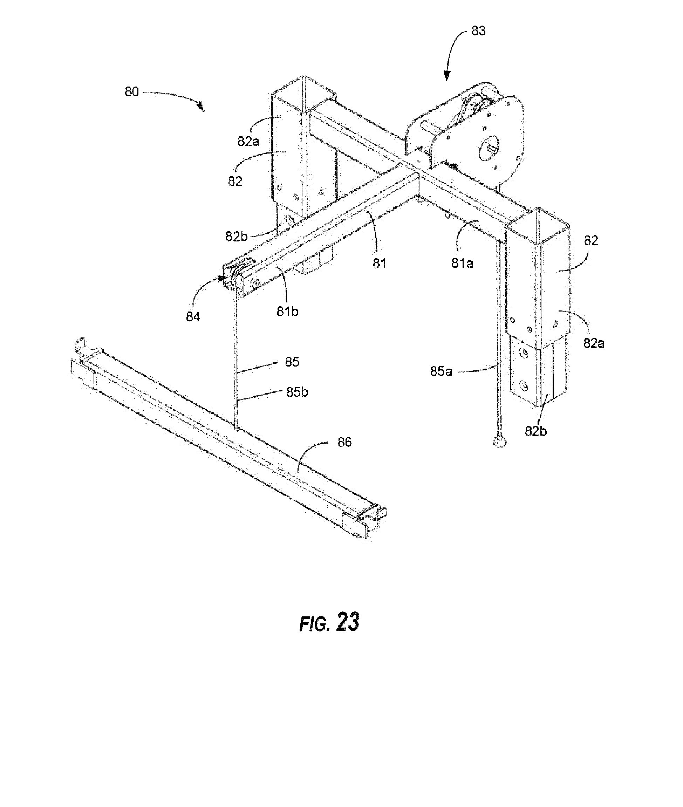

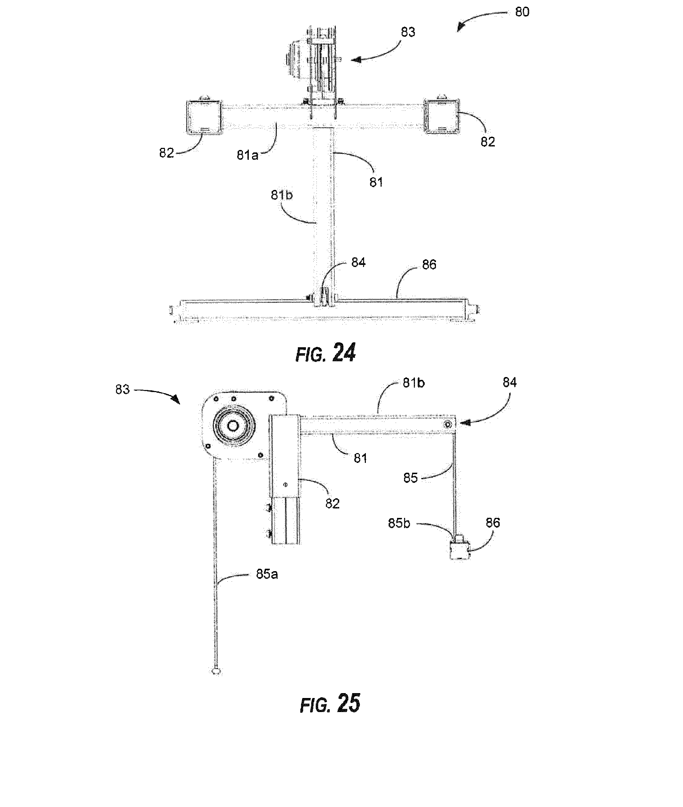

Figures 23-25 illustrate an exemplary embodiment of a lifting mechanism 80 that is configured to be attached or coupled to the fixture, such as the fixture 20, to assist in lifting the display devices 13 for help in mounting the display device 13 to the fixture 20 in particular embodiments. As shown, the lifting mechanism 80 includes an arm 81, a pair of supports or feet 82 connected to the arm 81, a lift 83 configured to move a cable 85 along a pulley 84. The arm 81 comprises a T-shape, having a base 81 a and a leg 81b. The ends of the base 81a of the arm 81 are connected to and supported by the two opposing supports 82. The leg 81b is coupled to the base 81a at one end and the opposing end is configured to receive the pulley 84, such that the pulley 84 is able to pivot relative to the arm 81.

Each support or foot 82 comprises a tubular body 82a that is configured to connect to the arm 81 and a tubular sleeve 82b. According to an exemplary embodiment, the tubular body 82a has a similar size and shape as the frame members 51 of the support 50, and the tubular sleeve 82b has a similar shape but smaller size relative to the frame member 51 to allow the sleeve 82b to nest in the frame member 51 when the support 82 is coupled to the frame member 51. The sleeve 82b of the support 82 may include holes, such as to receive fasteners to fix the coupled lifting mechanism 80 and frame member 51. Accordingly, the spacing between the two supports 82 may be the same as the spacing between the two frame members 51 of the frame structure, in which the lifting mechanism 80 is configured to be coupled to.

According to an exemplary embodiment, the lift 83 includes a mechanical device (e.g., a mechanical winch) configured to give mechanical advantage to assist a user in manually moving the cable 85 along the lift 83 and pulley 84, such as by pulling a first end 85a of the cable 85 and thereby moving (e.g., raising) a second end 85b of the cable 85. According to another exemplary embodiment, the lift 83 is an electro-mechanical device (e.g., an electro-mechanical winch having a motor) that is configured to move the cable 85, such as by winding (e.g., retracting) or unwinding (e.g., extracting) the cable 85, to raise or lower the second end 85b of the cable 85 to provide assistance in moving an object (e.g., display device 13) coupled to the second end 85b of the cable 85. Thus, the lift 83 is configured to move the cable 85 along the pulley 84, such as by retracting the first end 85a of the cable 85 into the lift 83 to wind the cable 85 to move the second end 85b of the cable 85 and the object attached or coupled thereto. The lifting mechanism 80 may also include an assist bracket 86 that is configured to be coupled to the second end 85b of the cable 85 and also configured to selectively engage the device (e.g., the display device 13, the device mount 17, etc.) being lifted. It should be noted that the lifting mechanism can be configured differently than disclosed herein.

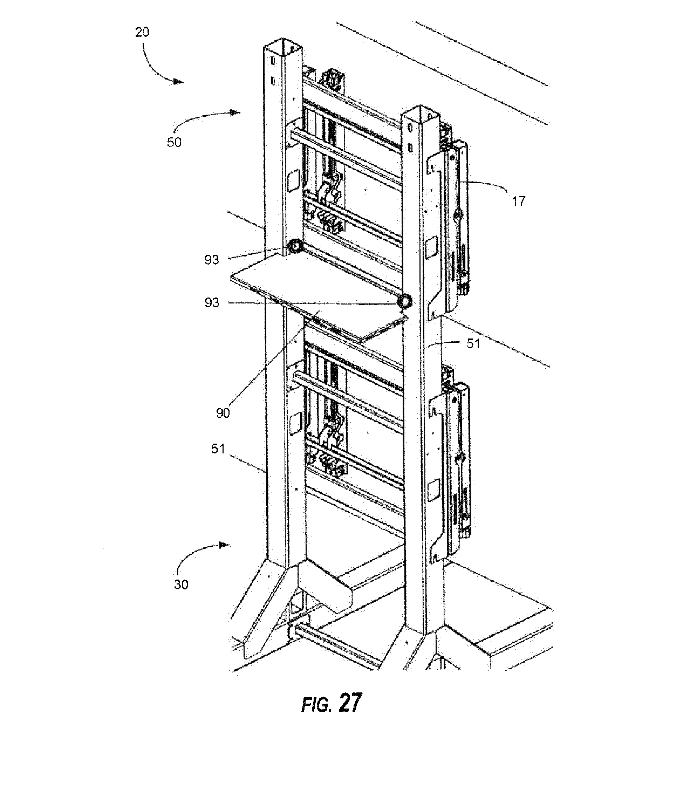

Figure 27 illustrates an exemplary embodiment of a shelf 90 configured to be coupled to the frame structure 30 of the fixture 20. The shelf 90 may comprise a flat portion, may have a flat portion and flanges that extend at an angle relative to the flat portion, or may have any suitable configuration. The shelf 90 is configured to be attached or coupled to the frame structure 30, such as to the support 50. As shown, the shelf 90 is coupled at corners 93 to the frame members 51 of the support 50 of the frame structure 30, through fasteners, welding, or any suitable method. The shelf 90 is configured to support, such as, for example, electronic equipment or accessories that are useful in displaying the display devices 13 coupled to the device mounts 17 connected to the fixture 20.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the modular moveable fixtures having modular frame structures as shown in the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments. Other substitutions, modifications, changes and omissions may also be made in the design, operating conditions and arrangement of the various exemplary embodiments without departing from the scope of the present invention.

## Claims

1. A fixture for supporting an audio/visual device selectively coupled to a device mount attached to the fixture, the fixture comprising:
a base that includes a plurality of interconnected members; and
a support that includes a plurality of interconnected members, the support being coupled to the base and configured to have a device mount coupled thereto;
wherein the base and support form a modular frame structure, the frame structure being configured to be interconnected with one or more adjacent frame structures;
wherein the frame structure is configured to interconnect with a frame structure of an adjacent fixture via at least one first extending member that interconnects the bases of the respective frame structures and at least one second extending member that interconnects the supports of the respective frame structures such that the fixture and the adjacent fixture have a spacing therebetween;
wherein the spacing is configurable at a first length that allows for audio/visual devices to be coupled to respective device mounts having a portrait arrangement; and
wherein the spacing is configurable at a second length that allows for audio/visual devices to be coupled to respective device mounts having a landscape arrangement.

2. The fixture of claim 1, wherein the base includes a pair of opposing frame members coupled to at least one cross member, and, optionally, the pair of opposing frame members of the base are coupled to a pair of cross members that form a substantially rectangular base.

3. The fixture of claim 1 or claim 2, wherein the support includes a pair of opposing frame members coupled to at least one cross member, and, optionally, the pair of opposing frame members of the support are coupled to a pair of cross members that form a substantially rectangular support.

4. The fixture of claim 1, claim 2 or claim 3, wherein each first and second extending member includes a flange configured to couple the extending member to the respective member of the frame structure.

5. The fixture of any one of claims 1 to 4, wherein the fixture includes one or more rollers, casters or wheels to facilitate movement of the frame structure.

6. The fixture of claim 1 or any one of claims 2 to 5, further comprising a roller pivotally coupled to an end of at least one member of the base, so that the fixture is moveable along the roller when the fixture is tilted; or
the fixture of claim 2 or any one of claims 3 to 5 when dependent on claim 2, further comprising a roller pivotally coupled to an end of each of the pair of frame members of the base, so that the fixture is moveable along the rollers when the fixture is tilted.

7. The fixture of any one of claims 1 to 6, comprising:
a roller pivotally coupled to an end of each of the frame members of the base, the roller being rotatable about an axis of rotation thereof;
wherein the fixture is moveable along the rollers when the fixture is tilted about the axis of rotation.

8. The fixture of any one of claims 1 to 7, comprising two or more adjacent frame structures.

9. A fixture for supporting an audio/visual device selectively coupled to a device mount attached to the fixture, the fixture comprising:
a base having a plurality of interconnected members comprising a pair of opposing frame members;
a support connected to the base, the support configured to have a device mount coupled thereto for supporting an attached audio/visual device; and
a roller pivotally coupled to an end of each of the frame members of the base, the roller being movable about an axis of rotation thereof;
wherein the fixture is moveable along the rollers when the fixture is tilted about the axis of rotation.

10. The fixture of claim 7, claim 8 or claim 9, wherein each frame member of the base includes two opposing walls that are configured to form a clevis with a pivot pin, such that the roller is pivotally coupled to the pivot pin between the walls of the frame member, and, optionally, a lock pin that engages an opening in an end of the pivot pin to prohibit the pivot pin from coming loose from the frame member, and, optionally, a plurality of bushings, wherein each bushing is disposed between one side of the roller and one of the opposing walls of the frame member.

11. The fixture of claim 9 or claim 10, further comprising a pair of adjustable legs disposed on opposing ends of each frame member of the base, wherein an offset distance between an end of each leg and the base is adjustable through manipulation of the respective leg; or
the fixture of claim 1 or any one of claims 2 to 8, further comprising an adjustable leg disposed in the base of the frame structure, wherein an offset distance between an end of the leg and the base is adjustable through manipulation of the leg.

12. A fixture for supporting an audio/visual device selectively coupled to a device mount attached to the fixture, the fixture comprising:
a pair of adjacent frame structures, each frame structure comprising:
a base having a plurality of interconnected members and a roller pivotally coupled to an end of one member of the plurality of members, the roller being moveable about an axis of rotation thereof;
a support connected to the base, the support configured to have a device mount coupled thereto for supporting an attached audio/visual device; and
an extending member interconnecting the pair of adjacent frame structures at a spacing therebetween;
wherein the spacing is configurable at a first length that allows for the audio/visual devices to be coupled to the device mounts having a portrait arrangement;
wherein the spacing is configurable at a second length that allows for the audio/visual devices to be coupled to the device mounts having a landscape arrangement; and
wherein the fixture is moveable along each roller when the fixture is tilted about the axis of rotation.

13. The fixture of claim 12, wherein the extending member is telescopically configured to allow adjustment of the length of the extending member between the first and second lengths of the spacing between the pair of adjacent frame structures; or
the fixture of claim 1 or any one of claims 2 to 8, wherein each first and second extending member is telescopically configured to allow adjustment of the length of each first and second extending member between the first and second lengths of the spacing between each respective pair of adjacent and interconnected frame structures.

14. The fixture of claim 1 or any one of claims 2 to 13, further comprising an extension configured to be coupled to the support of the frame structure to thereby extend the height of the support to provide for the attachment of an additional device mount to the extension.

15. The fixture of claim 1 or any one of claims 2 to 14, further comprising a cover assembly having a plurality of interconnected panels, wherein the cover assembly covers a a portion of the fixture, and/or a lifting mechanism that is configured to move a cable, the lifting mechanism having a foot that is configured to engage a member of the support of the fixture.
